(19) Europäisches Patentamt
European Patent Office
Office européen des brevets

(11) **EP 4 685 699 A1**

(12) **EUROPEAN PATENT APPLICATION**

(43) Date of publication:
**28.01.2026 Bulletin 2026/05**

(21) Application number: **25184351.2**

(22) Date of filing: **23.06.2025**

(51) International Patent Classification (IPC):
**G06N 3/0455** (2023.01)   **G06N 3/049** (2023.01)
**G06N 3/0495** (2023.01)

(52) Cooperative Patent Classification (CPC):
**G06N 3/0455; G06N 3/049; G06N 3/0495**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.07.2024 IN 202421056904**

(71) Applicant: **Tata Consultancy Services Limited
Maharashtra (IN)**

(72) Inventors:
• **BANERJEE, DIGHANCHAL**
  **700156 Kolkata (IN)**
• **GEORGE, ARUN**
  **560066 Bangalore (IN)**
• **DEY, SOUNAK**
  **700091 Kolkata (IN)**
• **BERA, TITAS**
  **700156 Kolkata (IN)**

(74) Representative: **Goddar, Heinz J.
Boehmert & Boehmert
Anwaltspartnerschaft mbB
Pettenkoferstrasse 22
80336 München (DE)**

(54) **METHODS AND SYSTEMS FOR APPROXIMATION OF KOOPMAN OPERATOR USING A SPIKING NEURAL NETWORK BASED ARCHITECTURE**

(57) Koopman operator theory is a widely used method to analyze, control, and predict the behavior of the states of a non-linear dynamical system using measurement functions in Hilbert space. Real time approximation of the Koopman operator is crucial in order to adapt and understand behavior of underlying non-linear dynamical system. Traditional approaches leverage matrix-based methods or artificial neural networks to approximate Koopman operator. However, such methods necessitate significant power and computational resources, therefore may not be suitable for applications that require real-time on-board processing. The problems of the conventional approaches are resolved based on a recent development of brain inspired spiking neural networks and neuromorphic computing platforms, as these offer extremely low-energy computation and real-time responses. Embodiments of the present disclosure provide implementation of a Spiking Neural Network (SNN) based architecture that efficiently approximate Koopman operator with minimal length of data and demonstrates significant computational savings.

200

| Receiving, a time varying input state vector representing a sequence of states of a non-linear dynamical system as input | 202 |

| Inputting the time varying state vector to a spiking neural network (SNN) based architecture, wherein the SNN based architecture comprises a spiking encoder block, a Koopman block and a spiking decoder block, wherein the spiking encoder block comprises of a stacked Leaky Integrate-and-Fire-neuron (LIF-neuron) layers, and wherein the stacked Leaky Integrate-and-Fire-neuron (LIF-neuron) layers comprises a direct spike encoding layer as a first layer and one or more subsequent LIF-neuron layers | 204 |

| Obtaining a sparse-spike domain representation of the time varying state vector from the direct spike encoding layer of the spiking encoder block of the SNN based architecture by applying the time varying state vector to a membrane potential of a plurality of LIF neurons | 206 |

| Applying the sparse-spike domain representation of the time varying state vector to the one or more subsequent LIF-neuron layers to obtain a time varying intermediate state vector providing a finite approximation of a sparse-spike domain representation of a plurality of Koopman eigenfunctions in a Koopman observable space | 208 |

| Estimating a plurality of complex eigen values continuously from the time varying intermediate state vector using the Koopman block of the SNN based architecture | 210 |

| Computing a Koopman operator Matrix as a parameterization of the plurality of complex eigen values, wherein the Koopman operator matrix linearly evolves dynamics in a latent space | 212 |

| Obtaining a time varying reconstructed state vector using the spiking decoder network of the SNN architecture by performing an inverse transformation from the Koopman observable space to an input space of the non-linear dynamical system | 214 |

**FIG. 2**

EP 4 685 699 A1

**Description**

CROSS-REFERENCE TO RELATED APPLICATIONS AND PRIORITY

The present application claims priority to Indian application no. 202421056904, filed on July 26, 2024.

TECHNICAL FIELD

The disclosure herein generally relates to the field of spiking neural network, and, more particularly, to methods and systems for approximation of Koopman operator using a spiking neural network based architecture.

BACKGROUND

Koopman operator theory has recently gained traction as a powerful alternative approach for analyzing a nonlinear dynamical system using evolution of measurement function. A non-linear dynamical system can be effectively represented by an infinite-dimensional linear operator acting on a Hilbert space encompassing all possible combination of system's state. Thereby, Koopman operator theory has been used to project the behavior of nonlinear fluid flow, specifically quantify transport or mixing in turbulent flows, nonlinear state reconstruction and data fusion, and/or the like. However, a fundamental challenge in Koopman operator theory lies in its inherent infinite dimensionality. This stems from the requirement to encompass space of all possible measurement functions, which necessitates an infinite number of degrees of freedom to fully represent. To overcome this hurdle, the focus of research efforts is on developing finite dimensional, matrix-based approximations of the Koopman operator.

One prominent technique for Koopman operator approximation is Dynamic Mode Decomposition (DMD). This method aims to identify a low-rank linear model that best approximates the Koopman operator's behavior in projecting spatial measurements forward in time. However, reliance solely on linear measurements in DMD can limit its effectiveness in capturing the complexities of inherently nonlinear systems. While augmenting measurement space with nonlinear functions has potential to enrich the resulting model, this approach presents a new challenge. Further, introduction of non-linearities may compromise a crucial property of closure under the Koopman operator. This lack of closure can hinder interpretability and effectiveness of approximated model.

Recently, Artificial Neural Network (ANN) based work has emerged to discover and represent eigenfunctions from data. Normally, Encoder-Decoder Networks are used for this purpose, but these approaches are both compute and power intensive and their memory footprint are quite high. This makes them unfit for cases such as sensor data fusion for autonomous vehicles or robots, where compute, memory and energy resources are scarce. Moreover, there are cases such as stable and agile maneuvering of drones in a gust where quick adaptation and understanding of the change in system with a varying degree of environmental disturbances is a must-have requirement and corresponding computation has to be done in-situ in the drone.

SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising: receiving, via one or more hardware processors, a time varying input state vector representing a sequence of states of a non-linear dynamical system as an input; inputting, via the one or more hardware processors, the time varying state vector to a spiking neural network (SNN) based architecture, wherein the SNN based architecture comprises a spiking encoder block, a Koopman block and a spiking decoder block, wherein the spiking encoder block comprises of a stacked Leaky Integrate-and-Fire-neuron (LIF-neuron) layers, and wherein the stacked Leaky Integrate-and-Fire-neuron (LIF-neuron) layers comprises a direct spike encoding layer as a first layer and one or more subsequent LIF-neuron layers; obtaining, via the one or more hardware processors, a sparse-spike domain representation of the time varying state vector from the direct spike encoding layer of the spiking encoder block of the SNN based architecture by applying the time varying state vector to a membrane potential of a plurality of LIF neurons; applying, via the one or more hardware processors, the sparse-spike domain representation of the time varying state vector to the one or more subsequent LIF-neuron layers to obtain a time varying intermediate state vector providing a finite approximation of a sparse-spike domain representation of a plurality of Koopman eigenfunctions in a Koopman observable space; estimating, via the one or more hardware processors, a plurality of complex eigen values continuously from the time varying intermediate state vector using the Koopman block of the SNN based architecture; computing, via the one or more hardware processors, a Koopman operator Matrix as a parameterization of the plurality of complex eigen values, wherein the Koopman operator matrix linearly evolves dynamics in a latent space; and obtaining, via the one or more hardware processors, a time varying reconstructed state vector using the spiking decoder network of the SNN architecture by performing an inverse transformation from the Koopman observable space to an input space of the non-linear dynamical system.

In another aspect, a system is provided. The system comprising a memory storing instructions; one or more Input/Output (I/O) interfaces; and one or more hardware processors coupled to the memory via the one or more I/O interfaces, wherein the one or more hardware processors (104) are configured by the instructions to: receive a time varying input state vector representing a sequence of states of a non-linear dynamical system as an input; input the time varying state vector to a spiking neural network (SNN) based architecture, wherein the SNN based architecture comprises a spiking encoder block, a Koopman block and a spiking decoder block, wherein the spiking encoder block comprises of a stacked Leaky Integrate-and-Fire-neuron (LIF-neuron) layers, and wherein the stacked Leaky Integrate-and-Fire-neuron (LIF-neuron) layers comprises a direct spike encoding layer as a first layer and one or more subsequent LIF-neuron layers; obtain a sparse-spike domain representation of the time varying state vector from the direct spike encoding layer of the spiking encoder block of the SNN based architecture by applying the time varying state vector to a membrane potential of a plurality of LIF neurons; apply the sparse-spike domain representation of the time varying state vector to the one or more subsequent LIF-neuron layers to obtain a time varying intermediate state vector providing a finite approximation of a sparse-spike domain representation of a plurality of Koopman eigenfunctions in a Koopman observable space; estimate a plurality of complex eigen values continuously from the time varying intermediate state vector using the Koopman block of the SNN based architecture; compute, a Koopman operator Matrix as a parameterization of the plurality of complex eigen values, wherein the Koopman operator matrix linearly evolves dynamics in a latent space; and obtain, a time varying reconstructed state vector using the spiking decoder network of the SNN architecture by performing an inverse transformation from the Koopman observable space to an input space of the non-linear dynamical system.

In yet another aspect, a non-transitory computer readable medium is provided. The non-transitory computer readable medium are configured by instructions for providing receiving a time varying input state vector representing a sequence of states of a non-linear dynamical system as an input; inputting the time varying state vector to a spiking neural network (SNN) based architecture, wherein the SNN based architecture comprises a spiking encoder block, a Koopman block and a spiking decoder block, wherein the spiking encoder block comprises of a stacked Leaky Integrate-and-Fire-neuron (LIF-neuron) layers, and wherein the stacked Leaky Integrate-and-Fire-neuron (LIF-neuron) layers comprises a direct spike encoding layer as a first layer and one or more subsequent LIF-neuron layers; obtaining a sparse-spike domain representation of the time varying state vector from the direct spike encoding layer of the spiking encoder block of the SNN based architecture by applying the time varying state vector to a membrane potential of a plurality of LIF neurons; applying the sparse-spike domain representation of the time varying state vector to the one or more subsequent LIF-neuron layers to obtain a time varying intermediate state vector providing a finite approximation of a sparse-spike domain representation of a plurality of Koopman eigenfunctions in a Koopman observable space; estimating a plurality of complex eigen values continuously from the time varying intermediate state vector using the Koopman block of the SNN based architecture; computing a Koopman operator Matrix as a parameterization of the plurality of complex eigen values, wherein the Koopman operator matrix linearly evolves dynamics in a latent space; and obtaining a time varying reconstructed state vector using the spiking decoder network of the SNN architecture by performing an inverse transformation from the Koopman observable space to an input space of the non-linear dynamical system.

In accordance with an embodiment of the present disclosure, the SNN based architecture provides a finite approximation of a Koopman operator by optimizing a loss function associated with the one or more parameters of the SNN based architecture.

In accordance with an embodiment of the present disclosure, the loss function is characterized as: $\mathcal{L} = \beta_1 L_{recon} + \beta_2 L_{pred} + \beta_3 L_{in} + \beta_4 L_{reg}$, where $L_{recon}$ represents a reconstruction loss component of the SNN based architecture, $L_{pred}$ represents a prediction loss component, $L_{in}$ represents a linearity loss component, $L_{reg}$ represents a regularization component, and $\beta_1$ $\beta_2$, $\beta_3$, and $\beta_4$ represent weight factors.

In accordance with an embodiment of the present disclosure, the reconstruction loss component is computed as a mean squared error between input sequence of states and reconstructed sequence of states of the non-linear dynamical system at time instant t.

In accordance with an embodiment of the present disclosure, the prediction loss component ensures that a future sequence of states of the non-linear dynamical system are accurately predicted from the Koopman observable space for a pre-defined time window.

In accordance with an embodiment of the present disclosure, the linear loss component ensures that the Koopman operator matrix evolves dynamics in the latent space in a linear fashion.

In accordance with an embodiment of the present disclosure, the regularization component is computed as:

$$L_{reg} = \left\| x_t - \varphi_s^{-1}\big(\varphi_s(x_t)\big) \right\|_{\infty} + \left\| x_{t+1} - \varphi_s^{-1}\big(K\varphi_s(x_t)\big) \right\|_{\infty} + \|W\|_2^2,$$

where, $x_t$ represents the sequence of states of the non-linear dynamical system at time instant $t$, $x_{t+1}$ represents the sequence of states of the non-linear dynamical system at time instant $t + 1$, $\varphi_s$ represents the spiking encoder block, $\varphi_s^{-1}$ represents the spiking decoder block, $K$ represents the Koopman operator matrix, and $W$ represents the one or more parameters of the SNN based architecture.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for approximation of Koopman operator using a spiking neural network based architecture, in accordance with some embodiments of the present disclosure.
FIG. 2 illustrates an exemplary flow diagram illustrating a method for approximation of Koopman operator using a spiking neural network based architecture, using the system of FIG. 1, in accordance with some embodiments of the present disclosure.
FIG. 3 illustrates a broad level functional block diagram of the spiking neural network based architecture of the system of FIG. 1, in accordance with some embodiments of the present disclosure.
FIGS. 4A through 4D depict graphical representations illustrating visualization of the system for approximation of Koopman operator in terms of trajectory and latent space, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

To analyze, control, and predict the behavior of the states of a non-linear dynamical system using measurement functions in Hilbert space is a widely used method known as Koopman operator theory. However, a fundamental challenge in Koopman operator theory lies in its inherent infinite dimensionality. To overcome this hurdle, the focus of research efforts is on developing finite dimensional, matrix-based approximations of the Koopman operator. The Koopman operator can be approximated using several methods. Kernel-Based Approximations is a data-driven approach for estimating stochastic differential equations on reproducing kernel Hilbert spaces (RKHS), while Finite Section Theory achieves same by applying a concept of infinite-dimensional operators on those equations. Dynamic Mode Decomposition (DMD), Extended Dynamic Mode Decomposition (EDMD) and other similar variants are data-driven methods used to approximate leading eigenvalues, eigenfunctions, and modes of the Koopman operator. Deep neural networks are also used for learning Koopman eigenfunctions using autoencoder networks.

However, there are several gaps in the approximation of the Koopman operator. Problems like Finite- Dimensional Limitations arise as there is access to finite-dimensional data only, thus it is important to study approximation properties of finite-dimensional numerical algorithms. Secondly, the composition operators under study are rarely compact or self-adjoint, posing Operator Properties challenges. Third, Infinite-Dimensional Challenges occur as finite-dimensional approximation of the Koopman operator involves identifying a subspace spanned by a subset of eigenfunctions. Other issues include the non-obvious linearization of non-linear DEs by the Koopman function for closed-loop systems, the compute-heavy and high latency nature of approximating Koopman via artificial neural networks (ANN), and the computational heaviness of solving n-th order differential equations for real-world systems due to non-linearity.

Embodiments of the present disclosure resolve the problems of the traditional approaches by providing a method and system for approximation of Koopman operator using a spiking neural network based architecture. Spiking neural networks (SNN) has emerged as a new generation of AI paradigm that mimic functionalities of mammalian brain neural networks, process sparse asynchronous events, and are good at learning temporal patterns. When run on neuromorphic computing platforms, that follow the non von Neumann architecture, SNNs offer high energy efficiency which is crucial in control engineering. SNNs can integrate with reinforcement learning mechanisms, allowing a system to adapt based on environmental feedback. By integrating environmental dynamics into the reward function, SNNs can learn robust controllers efficiently. Due to these capabilities, in the present disclosure, SNNs are used to approximate Koopman operators more efficiently thereby enhancing Koopman-based control systems. Moreover, SNNs offer very low energy consumption when they run on compatible neuromorphic hardware, enabling their implementation in real-world control systems.

In the present disclosure, a spiking neural network (SNN) based architecture that can approximate Koopman operator is designed, implemented and network performance is validated on different systems. It is observed that the SNN based architecture is computationally efficient and it achieves at par performance in approximating non-linear systems compared to traditional approaches. More specifically, the present disclosure describes the following:

1. SNN models can be used for systems with both discrete and continuous eigen spectrum. Moreover, it can approximate Koopman operator with different initial condition of system.

2. The SNN based architecture can effectively approximate the Koopman operator even with minimal length of data. It is observed to work with 20% of the original data length. This faster inference even with very small lengths of data potentially saves a lot of time and computational resources.

3. The SNN based architecture is observed to perform up to $4\times$ less addition operations and $43\times$ less multiplication compared to its artificial neural network (ANN) counterpart.

4. The SNN based architecture is estimated to consume ~ $10^{-2}\mu J$ per inference when run on a state in the art (Intel™ Loihi) neuromorphic board.

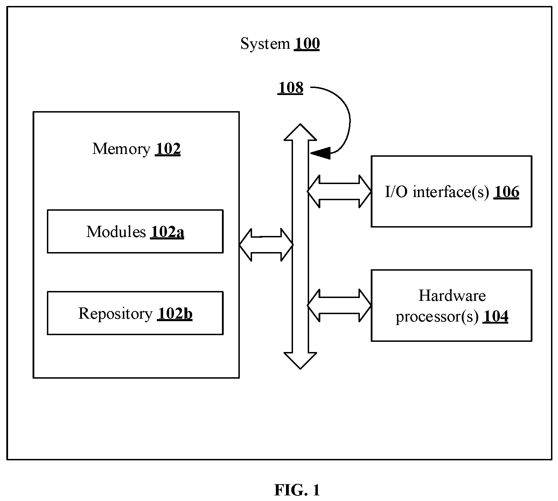

Referring now to the drawings, and more particularly to FIGS. 1 through 4D, where similar reference characters denote corresponding features consistently throughout the figures, there are shown preferred embodiments and these embodiments are described in the context of the following exemplary system and/or method.

FIG. 1 illustrates an exemplary block diagram of a system for approximation of Koopman operator using a spiking neural network based architecture, in accordance with some embodiments of the present disclosure.

In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such an external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

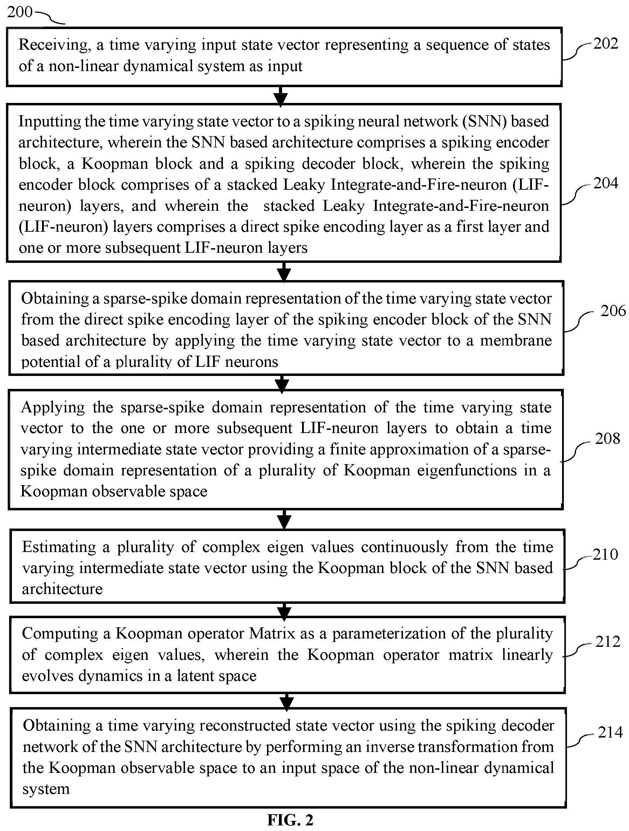

FIG. 2 illustrates an exemplary flow diagram illustrating a method for approximation of Koopman operator using a spiking neural network based architecture, using the system of FIG. 1, in accordance with some embodiments of the present disclosure.

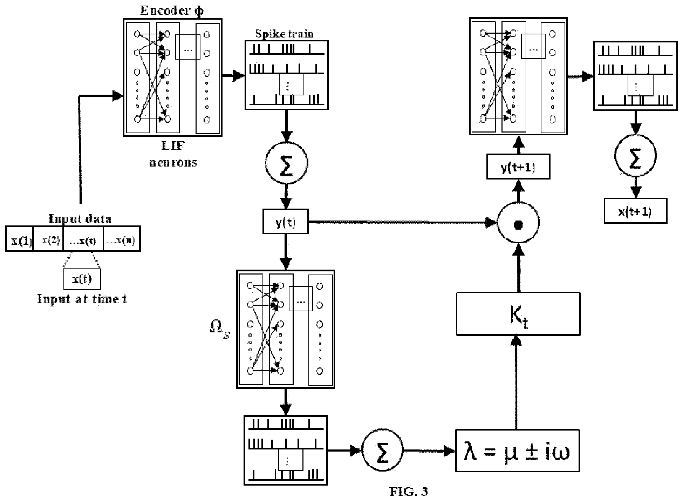

Referring to FIG. 2, in an embodiment, the system 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the flow diagram as depicted in FIG. 2, the block diagram of FIG. 3, and one or more examples. Although steps of the method 200 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 202 of the present disclosure, the one or more hardware processors 104 are configured to receive a time varying input state vector representing a sequence of states of a non-linear dynamical system as an input. In the present disclosure, the time varying input state vector is represented as $X(t)$ with $t$ ranging from $1 : T$ and the sequence of states of the non-linear dynamical system are represented as $x_1, x_2, x_3 \ldots .x_t \ldots .x_n$.

Further, at step 204 of the present disclosure, the one or more hardware processors 104 are configured to input the time varying state vector to a spiking neural network (SNN) based architecture. In context of the present disclosure, the expressions 'architecture' and 'model' can be interchangeably use throughout the description. FIG. 3 illustrates a broad level functional block diagram of the spiking neural network based architecture of the system of FIG. 1, in accordance with some embodiments of the present disclosure. As shown in FIG. 3, the SNN based architecture comprises a spiking encoder block, a Koopman block and a spiking decoder block. The spiking encoder block comprises of a stacked Leaky Integrate-and-Fire-neuron (LIF-neuron) layers. The stacked Leaky Integrate-and-Fire-neuron (LIF-neuron) layers comprises a direct spike encoding layer as a first layer and one or more subsequent LIF-neuron layers

In an embodiment, Koopman operator theory states that the non-linear dynamical systems can be represented as a linear operator in Hilbert space of measurement functions of its state. This linear operator should be able to predict a measurement function in time and also tends to be infinite dimensional in nature. One major difference between classical linearization techniques and Koopman operator method is that while the former is local which mean it behaves linearly around a fixed set of points, the later tends to be global. For any given continuous dynamical system of the form shown in equation (1) below:

$$\frac{d}{dt} X(t) = f\big( X(t)\big) \qquad (1)$$

an equivalent discrete-time system can be described in form of a Flow Map, $F_t$ as shown in equation (2) below:

$$F_t = X(t_0) + \int_{t_0}^{t_0+t} f\big( X(\tau)\big)\, d\tau \quad (2)$$

The Koopman Operator represented by $\kappa$ for this system can be defined as shown in equation (3) below:

$$\kappa_t g = g \circ F_t \Rightarrow \kappa_t\, g\big( X(t)\big) = g\big( X(t+1)\big) \quad (3)$$

where $g$ is the Hilbert space measurement function, known as observables. The simplest possible observable function is an identity function under some chosen Hilbert space basis, but this becomes more complex with time and associated advancing dynamics. Moreover, Koopman observables are of infinite dimensions and hence computing it and designing a control system based on it becomes intractable. Due to these reasons, there is a need to find an appropriate finite representation for key measurement functions. One possibility is to try finding a relevant subset of Koopman eigenfunctions, $\varphi(x)$ as they can evolve the dynamics in a linear fashion.

SNNs are a new generation of neural network that mimic mammalian brain functionality very closely. Here, the behavior of individual neurons are simulated via a discrete chain of spikes (i.e., events) over a time span against a given external stimulus. Unlike traditional ANNs that operate based on continuous firing rates, spiking neurons do not transmit information at each propagation cycle, but they transmit information only when a membrane potential which is an intrinsic quality of the neuron related to its membrane electrical charge reaches a specific threshold value. When the membrane potential reaches the specific threshold value, the neuron fires a voltage surge and a spike is emitted that travels to subsequent neurons in the network. They, in turn, increase or decrease their potentials in response to this signal. This event based asynchronous processing of input is a key feature of SNN and this in turn results into reduction of processing and computation power.

Amongst several computational models of neuron that are used in SNN, the most used and prominent one is the Leaky Integrate-and-Fire (LIF) model. In this model, a momentary activation level is normally considered to be the neuron's state, with incoming spikes pushing this value higher or lower, until the state eventually reaches threshold (or decays down), and finally the neuron fires. After firing, the state variable is reset to a lower value called resting potential. The momentary activation level is modeled as a differential equation shown in equation 4 below:

$$\tau_m \frac{dV}{dt} = (V_{rest} - V) + IR$$

$$s = \begin{cases} 1, & V \geq V_{thresh} \\ 0, & V < V_{thresh} \end{cases} \qquad (4)$$

In equation 4, $V$ denotes the neuron's membrane potential, which fluctuates based on an input stimulus. When $V$ surpasses a certain threshold denoted by $V_{thresh}$, a spike s is emitted by the neuron. The resting membrane potential is represented by $V_{rest}$, while $I$ signifies a cumulative input current to the neuron from all its synapses. Total resistance that $I$ encounters during synaptic transmission is denoted by $R$. In absence of any input, $V$ undergoes an exponential decay with time constant $\tau_m$. In the present disclosure, the Euler method is employed to discretize equation 4 for the purpose of simulation. The final vectorized form of the equations for a layer of LIF neurons is given by equation 5 below:

$$u_t = v_{t-1} + W^T s_t^{in}$$

$$s_t^{out} = \mathcal{H}(u_t - v^{thresh}) \qquad (5)$$

$$v_t = \alpha u_t - (v^{thresh} \odot s_t^{out})$$

At time $t$, $v_t$ denotes the membrane potential vectors of the LIF neurons, and $u_t$ signifies an intermediate potential vector. In equation 4, an incoming input term $IR$ is represented as a dot product of synaptic weights $W$ and an incoming input spike vector $s$ in $t$. The output spiking activity of the LIF neurons is represented by $s_t^{out}$, which is computed as the Heaviside Step function ($\mathcal{H}$) of the difference between $u_t$ and the threshold. The membrane potential at time t decays with a constant decay factor of $\alpha$, approximated by $e^{\frac{1}{\tau_m}}$ and $\odot$ symbolizes a Hadamard product. The discretized LIF equations employ a reset by subtraction method rather than making the membrane potential reset to zero. This reduces some of the information loss that can occur in vanilla spiking networks by retaining the residual membrane potential.

In an embodiment, at step 206 of the present disclosure, the one or more hardware processors 104 are configured to obtain a sparse-spike domain representation of the time varying state vector from the direct spike encoding layer of the spiking encoder block of the SNN based architecture by applying the time varying state vector to a membrane potential of a plurality of LIF neurons. In an embodiment, the structure of the Koopman block is same as of the spiking encoder block. Further, at step 208 of the present disclosure, the one or more hardware processors 104 are configured to apply the sparse-spike domain representation of the time varying state vector to the one or more subsequent LIF-neuron layers to obtain a time varying intermediate state vector providing a finite approximation of a sparse-spike domain representation of a plurality of Koopman eigenfunctions in a Koopman observable space. The plurality of Koopman eigenfunctions ensure a closure property within the Koopman observable space. The time varying intermediate state vector is represented by Y(t). As shown in FIG. 3, the time varying input state vector represented as $X(t)$ with $t$ ranging from $1 : T$ is provided as input to the spiking encoder block. A corresponding spike-activity dictates the spike domain representation of the sequence of states. Due to stateful nature, the plurality of LIF neurons are able to encode continuous sequential values into sparse spike-train representations retaining only the relevant non-redundant information. Subsequent LIF-neuron layers extract a latent eigenfunction representations in the spike domain. The output spike trains of the spiking encoder block are integrated & converted into real-valued domain as the time varying intermediate state vector represented by $Y(t)$ and then are forwarded to the next block. The spiking encoder block is represented by $\varphi_s$ and tries to find the finite approximations of suitable subsets of Koopman eigenfunctions of the non-linear dynamical system. The spiking encoder block imparts robustness to the non-linear dynamical system along with computation.

At step 210 of the present disclosure, the one or more hardware processors 104 are configured to estimate a plurality of complex eigen values continuously from the time varying intermediate state vector using the Koopman block of the SNN based architecture. The Koopman block is represented by $\Omega_s$ which is used for capturing the continuous spectrum of eigenvalues. Further, at step 212 of the present disclosure, the one or more hardware processors 104 are configured to compute a Koopman operator matrix as a parameterization of the plurality of complex eigen values. The Koopman operator matrix linearly evolves dynamics in a latent space. The Koopman block continuously estimates the varying plurality of complex eigen values of the non-dynamical system from the time varying intermediate state vector represented by $Y(t)$. For enforcing symmetry, radius of a plurality of latent states represented by $(\|y_t\|_2^2)$ is extracted and used as a substitute for estimating the plurality of complex eigen values. The Koopman operator matrix which linearly evolves the dynamics in the latent space, can then be continuously constructed as a parameterization of these estimated plurality of complex eigen values. For each of a complex pair of eigenvalues from the plurality of complex eigen values at time $t$, the corresponding estimated Koopman Operator Matrix at time instant $t$ represented by $K_t$ takes a Jordan block of the form shown in equation (6) below:

$$exp(\mu_t \Delta t) = \begin{bmatrix} \cos(\omega_t \Delta t) & -\sin(\omega_t \Delta t) \\ \sin(\omega_t \Delta t) & \cos(\omega_t \Delta t) \end{bmatrix} \quad (6)$$

where the complex pair of eigenvalues at time t are represented by $\lambda_t = \mu_t \pm i\omega_t$,

Further, at step 214 of the present disclosure, the one or more hardware processors 104 are configured to obtain a time varying reconstructed state vector using the spiking decoder network of the SNN architecture by performing an inverse transformation from the Koopman observable space to an input space of the non-linear dynamical system. The spiking decoder block is represented by $\varphi_s^{-1}$. In other words, the spiking decoder block performs the inverse transformation from the latent space $y_t$ to native state space $x_t$ of the non-linear dynamical system. In an embodiment, the structure of the spiking decoder block is exactly the same as that of the spiking encoder block, but in reverse order. For Instance, for a spiking encoder block with layer structure $l_1 \times l_2 \times \cdots \times l_n$, the spiking decoder network will be having a layer structure like $l_n \times l_{n-1} \times \cdots \times l_1$.

In an embodiment, backpropagation is a common method used in training traditional neural networks, and its application in SNNs is an area of active research. The challenge lies in the fact that SNNs involve discrete spike events, which create discontinuities in error surface, making it difficult to apply standard backpropagation. However, several methods such as surrogate gradient learning are developed to overcome it, where a differentiable function is used to approximate discontinuous spiking nonlinearity. This allows the network to leverage the power of gradient-based learning algorithms. In the present disclosure, *arctan* is used as a gradient approximation function.

In an embodiment, the SNN based architecture provides a finite approximation of a Koopman operator by optimizing a loss function associated with the one or more parameters of the SNN based architecture. The loss function accurately learns the Koopman operator and observables. The one or more parameters of the SNN based architecture may include but are not limited to synaptic weights. Further, a stochastic gradient descent (SGD) is used as an optimizer with the loss function. The loss function is characterized as: $\mathcal{L} = \beta_1 L_{recon} + \beta_2 L_{pred} + \beta_3 L_{in} + \beta_4 L_{reg}$, where $L_{recon}$ represents a reconstruction loss component of the SNN based architecture, $L_{pred}$ represents a prediction loss component, $L_{in}$ represents a linearity loss component, $L_{reg}$ represents a regularization component, and $\beta_1$ $\beta_2$, $\beta_3$, and $\beta_4$ represent weight factors. the reconstruction loss component is computed as a mean squared error between input sequence of states and reconstructed sequence of states of the non-linear dynamical system at time instant $t$. In other words, the reconstruction loss component $L_{recon}$ of the SNN based architecture is the mean squared error between an input state value $x_t$ and reconstructed output from spiking decoder block, $\varphi_s^{-1}(y_t)$. The prediction loss component $L_{pred}$ and the linearity loss component $L_{in}$ ensure that the observable space that is learnt is indeed a Koopman eigenspace. The prediction loss component $L_{pred}$ ensures that a future sequence of states of the non-linear dynamical system are accurately predicted from the Koopman observable space for a pre-defined time window. The pre-defined time window is represented by $T_{pred}$. In all experiments of the present disclosure, $T_{pred}$ is taken as half of the value of $T$. The linear loss component ensures that the Koopman operator matrix evolves dynamics in the latent space in a linear fashion. The Koopman operator matrix at time instant $t$ is represented by $K_t$. Each of the components of the loss function are combined together with corresponding weight factors ($\beta_i$) to form final loss function $\mathcal{L}$ which is shown in equation (7) below:

$$\mathcal{L} = \beta_1 \left\| x_t - \varphi_s^{-1}\left(\varphi_s(x_t)\right) \right\|_2 + \beta_2 \frac{1}{T_{pred}} \Sigma_{i=1}^{T_{pred}} \left\| x_{t+i} - \varphi_s^{-1}\left(K^i \varphi_s(x_t)\right) \right\|_2 +$$

$$\beta_3 \frac{1}{T-1} \Sigma_{i=1}^{T-1} \left\| \varphi_s(x_{t+i}) - K^i \varphi_s(x_t) \right\|_2 + \beta_4 L_{reg} \qquad (7)$$

In equation (7), $K^i$ refer to a combined Koopman operator matrix, which is defined as $K^i = \prod_{j=1}^{i} K_j$. To improve the performance, contributor of maximum error during the reconstruction and next-timestep prediction is additionally penalized. To balance out and prevent overfitting, the regularization component $L_{reg}$ is used on the one or more parameters of the SNN based architecture. The regularization component is computed as:

$$L_{reg} = \left\| x_t - \varphi_s^{-1}\left(\varphi_s(x_t)\right) \right\|_\infty + \left\| x_{t+1} - \varphi_s^{-1}\left(K \varphi_s(x_t)\right) \right\|_\infty + \|W\|_2^2,$$

where, $x_t$ represents the sequence of states of the non-linear dynamical system at time instant $t$, $x_{t+1}$ represents the sequence of states of the non-linear dynamical system at time instant $t + 1$, $\varphi_s$ represents the spiking encoder block, $\varphi_s^{-1}$ represents the spiking decoder block, $K$ represents the Koopman operator matrix, and $W$ represents the one or more parameters of the SNN based architecture.

In the present disclosure, experiments are conducted using four distinct datasets- two with discrete eigen spectrum and other two with continuous eigen spectrum.

1) Datasets with discrete Eigen Spectrum: To create such datasets, first a simple nonlinear system is considered, followed by a spacecraft rendezvous problem.

**Case I - Discrete Spectrum:** This is a simple nonlinear system with a single fixed point and a discrete eigenvalue spectrum as represented by equation (8) below:

$$\dot{x}_1 = c_1 x_1$$
$$\dot{x}_2 = c_2(x_2 - x_1^2) \qquad (8)$$

The dataset for the discrete spectrum is generated using random initial conditions, where $x_1$ and $x_2$ are in the range [-0.5,0.5] and $c_1$ = -0.05 and $c_2$ = -1. This specific region of the phase space is adequate to encapsulate the dynamics. The Koopman embedding is used to identify nonlinear coordinates that flatten this inertial manifold, providing a globally linear representation of the dynamics.

**Case II- Spacecraft Rendezvous Problem:** As another instance of system with discrete eigen structure, problem of Low-Earth-Orbit rendezvous between two spacecrafts, considered as a 'target' and a 'chaser', in a circular orbit is examined. Relative dynamics between the two spacecraft can be applied using Euler-Lagrange formulation to the Lagrangian of an overall system $L = T - U$ where $T$ is the kinetic energy and $U$ is the potential energy that can be expanded as $U = -\frac{\mu}{a} \Sigma_{i=0}^{\infty} P_k \cos \alpha \left(\frac{\rho}{a}\right)^k$ , where $\alpha$ is a relative angle between the target and the chaser, $P_k$ are $k^{th}$ order Legendre polynomials, $\rho$ is a relative distance between the two spacecrafts, $\mu$ is a gravitational parameter, and $a$ is radius of the circular orbit. Consideration of the first three potentials in the expansion of $U$, leads to the linear Hill-Clohessy-Wiltshire (HCW) equations as shown in equation (9) below for a 2-D engagement scenario:

$$\ddot{x} = 3n^2 x + 2n\dot{y} \qquad (9)$$
$$\ddot{y} = 2n\dot{x}$$

where, $[x,y]^T$ is the relative separation between two spacecraft defined in a moving local vertical local horizontal (LVLH) coordinate system centered around the target spacecraft. In these equations, the term $n$ is defined as $\sqrt{\frac{\mu_g}{a}}$, where $a$ is length of the semi-major axis (i.e., = 6793137), indicative of a low earth orbit), and $\mu_g$ is a constant, valued at $3.986 \times 1014$. When the magnitude of the relative position and velocity is substantial, a linear approximation of the HCW equations cannot fully describe the system and consideration of higher orders which are greater than 3 in $U$ are necessary leading to a non-linear system of equations. To test the efficacy of the method of the present disclosure for Koopman operator approximation under various initialization conditions, the above equations are simulated perturbed with a 4th order gravitational potential term, under random initial positions and having random initial velocities. 5000 such random trajectories are generated for training the Koopman operator network where initial relative coordinates were sampled uniformly from [-100,100] and initial relative velocities were sampled from [-3.0,3.0]. To check the generalization with respect to initial conditions, a separate testing dataset of 2000 trajectories was generated from a broader range of initialization values, with positional values sampled from [-150,150] and velocity values from [-5.0,5.0].

2) Datasets with Continuous Eigen Spectrum: To create such datasets, a nonlinear pendulum system and a high-dimensional unsteady fluid flow around a cylinder are considered as these exhibit continuous spectra of eigen values.

**Case I - Non-linear Pendulum:** Here, a non-linear pendulum is examined that has a continuous eigenvalue spectrum as shown in the equation (10) shown below:

$$\dot{x}_1 = x_2$$
$$\dot{x}_2 = -\sin(x_1) \quad (10)$$

The dataset for this pendulum is generated using random initial conditions, where $x_1$ in the range [-3.1,3.1], slightly less than the range [$-\pi,\pi$], and $x_2$ varies between [-2,2].

**Case II** - **High-dimensional nonlinear fluid flow:** Next, a nonlinear fluid flow that occurs around a circular cylinder as a bluff body is examined. The high-dimensional dynamics of this system evolve on a low-dimensional attractor, represented by a slow manifold as shown in the equation (11) below:

$$\dot{x}_1 = c_1 x_1 - c_2 x_2 + A x_1 x_3$$
$$\dot{x}_2 = c_2 x_1 + c_1 x_2 + A x_2 x_3 \quad (11)$$
$$\dot{x}_3 = -c_3(x_3 - x_1^2 - x_2^2)$$

where $\{x_1,x_2,x_3\}$ are dimensional representations, and $\{c_1,c_2,c_3,A\}$ denotes constants. The fluid flow problem, when confined to a slow manifold, is derived from random initial conditions $x$ on a bowl with radius $r$. Here, cartesian co-ordinates are transformed to polar co-ordinates by the substitution $x_1 = r \cos\theta$, $x_2 = r\sin\theta$, and $x_3 = (x_1^2 + x_2^2)$, where $r$ lies in the range [0, 1.1], $\theta$ is within [$0,2\pi$]. This encapsulates all the dynamics on the slow manifold, which are composed of trajectories spiraling towards a limit cycle at $r = 1$. This is referred to as Fluid Flow 1. The fluid flow problem, when extended beyond the slow manifold, is derived from random initial conditions $x$ where $x_1$ lies in the range [-1.1, 1.1], $x_2$ is within [-1.1,1.1], and $x_3$ is within [0,2.42]. These boundaries are selected to encompass the dynamics on the slow manifold covered by the preceding dataset, as well as trajectories that originate off the slow manifold. Any trajectory that expands to $x_3 > 2.5$ is discarded to ensure the domain remains reasonably compact and well-sampled. This is referred as Fluid Flow 2. For both the cases, $c_1$ = 0.1, $c_2$ = 1, $c_3$ = 10 and $A$ = -0.1.

**Experimental Setup:**

The SNN based architecture of the present disclosure was simulated using state in the art libraries such as PyTorch and SNNTorch. Table 1 below provides network architectures of the spiking Encoder block and the Koopman block for various datasets. In Table 1, *FC* represents fully Connected layer and associated dimensions are in numbers.

Table 1

|  | $\varphi_s$ | $\Omega_s$ |
|---|---|---|
| **Discrete Spectrum** | 2-FC-160-FC-160-FC- 2 | 1-FC-90-FC-90-FC-90-FC-1 |
| **Non-Linear Pendulum** | 2-FC-80-FC-80-FC- 2 | 1-FC-170-FC-2 |
| **Fluid Flow 1** | 3-FC-130-FC-3 | 1-FC-20-FC-20-FC-2, |
| **Fluid Flow 2** | 3-FC-105-FC-2 | 1-FC-300-FC-2 |

Only the spiking encoder network represented by ($\varphi s$) is provided since the spiking decoder network represented by $\varphi_s^{-1}$ is always symmetrical to the spiking encoder network. For each of the above-mentioned datasets, there are efforts to come up with optimal hyper-parameters by means of a randomized grid search. In all experiments, the decay factor $\alpha$ is set to 0.65 and the optimal $v^{thresh}$ is set to 0.5. The number of epochs and the learning rate was fixed at 100 and 0.001 respectively in all the experiments. The β-values used for learning the Koopman operator are given in the Table 2. The discretized time step $\Delta t$ is kept as 0.02 for all the experiments.

Table 2

|  | **Discrete Spectrum** | **Non-Linear Pendulum** | **Fluid Flow 1** | **Fluid Flow 2** |
|---|---|---|---|---|
| $\beta_1$ | IE-1 | IE-3 | IE-1 | IE-1 |
| $\beta_2$ | IE-1 | IE-3 | IE-1 | IE-1 |
| $\beta_3$ | IE0 | IE-1 | IE0 | IE0 |
| $\beta_4$ | IE-8 | IE-9 | IE-8 | IE-9 |

**Experimental Results:**

In the present disclosure, a comparative analysis of Approximation performance between ANN and SNN Koopman models. Table 3 below provides a performance comparison between ANN and SNN for Koopman approximation on multiple datasets.

Table 3

| Dataset Name | Length of data | ANN | | | SNN | | |
|---|---|---|---|---|---|---|---|
|  |  | Train Error | Val Error | Test Error | Train Error | Val Error | Test Error |
| **Discrete Spectrum** | 51 | 1.65E-7 | 1.87E-7 | **1.87E-7** | 4.73E-4 | 4.42E-4 | 4.97E-4 |
|  | 41 | 2.35E-3 | 2.79E-3 | 2.99E-3 | 4.68E-4 | 4.74E-4 | **4.75E-4** |
|  | 31 | 1.24E-3 | 1.76E-3 | 1.76E-3 | 4.57E-4 | 4.79E-4 | **4.98E-4** |
|  | 21 | 6.09E-4 | 1.07E-3 | 1.07E-3 | 5.36E-4 | 9.90E-4 | **9.42E-4** |
|  | 11 | 2.86E-4 | 7.26E-4 | 8.11E-4 | 2.05E-4 | 4.09E-4 | **4.11E-4** |
| **Non-Linear Pendulum** | 51 | 8.30E-6 | 1.11E-5 | **1.30E-5** | 5.85E-4 | 5.69E-4 | 5.34E-4 |
|  | 41 | 4.39E-4 | 7.02E-4 | 7.19E-4 | 5.63E-4 | 7.23E-4 | 7.74E-4 |
|  | 31 | 2.07E-4 | 4.09E-4 | 3.84E-4 | 6.12E-4 | 6.34E-4 | 6.57E-4 |
|  | 21 | 9.13E-5 | 2.30E-4 | 2.66E-4 | 6.71E-4 | 6.89E-4 | 7.14E-4 |
|  | 11 | 3.87E-5 | 1.74E-4 | 1.72E-4 | 7.18E-4 | 7.39E-4 | 7.56E-4 |
| **Fluid Flow 1** | 101 | 7.00E-6 | 7.61E-6 | **7.53E-6** | 7.73E-4 | 7.84E-4 | 7.95E-4 |
|  | 81 | 7.19E-3 | 1.11E-2 | 1.09E-2 | 3.49E-4 | 3.64E-4 | **3.53E-4** |
|  | 61 | 7.37E-3 | 1.10E-2 | 1.10E-2 | 3.65E-4 | 3.63E-4 | **3.66E-4** |
|  | 41 | 5.43E-3 | 1.07E-2 | 1.07E-2 | 1.57E-4 | 1.62E-4 | **1.58E-4** |
|  | 21 | 1.08E-3 | 4.25E-3 | 4.28E-3 | 3.39E-4 | 3.60E-4 | **3.44E-4** |

(continued)

| Dataset Name | Length of data | ANN | | | SNN | | |
|---|---|---|---|---|---|---|---|
| | | Train Error | Val Error | Test Error | Train Error | Val Error | Test Error |
| Fluid Flow 2 | 121 | 5.22E-7 | 6.12E-7 | **6.27E-7** | 4.27E-4 | 4.22E-4 | 4.29E-4 |
| | 96 | 3.66E-3 | 5.78E-3 | 5.91E-3 | 3.73E-4 | 3.57E-4 | **3.80E-4** |
| | 72 | 2.28E-3 | 5.51E-3 | 5.46E-3 | 3.79E-4 | 3.63E-4 | **3.72E-4** |
| | 48 | 2.37E-3 | 5.24E-3 | 5.27E-3 | 3.61E-4 | 3.62E-4 | **3.60E-4** |
| | 24 | 2.39E-4 | 1.96E-3 | 2.01E-3 | 3.18E-4 | 3.05E-4 | **3.07E-4** |

As shown in Table 3, the approximation performance is quantified by a Mean Error, combining first 3 components of the Loss function $\mathcal{L}$ during inference. It is observed from the data in Table 3 that the ANN model's performance in approximating the Koopman Operator is optimal when dealing with larger data lengths. This suggests that the ANN model's ability to accurately approximate the Koopman Operator is heavily dependent on the size of the data it is processing. In contrast, The SNN based architecture demonstrates a consistent error rate when approximating the Koopman Operator, regardless of the trajectory length. This indicates that the SNN model's performance is not significantly affected by the size of the data, making it a more reliable choice for diverse data sizes. Moreover, the SNN model exhibits a faster learning of dynamics, even when the sample length is as short as 21 or 11. This highlights the SNN based architecture's superior adaptability and efficiency in learning from smaller data sets. However, the ANN model's performance significantly deteriorates when dealing with smaller data lengths. This degradation in performance underscores the limitations of the ANN model in handling smaller data sets and its dependency on larger data lengths for optimal performance. One outlier to this is observed in the case of the non-linear pendulum dataset, where ANN shows superior performance over SNN irrespective of the length of the data. The outlier behaviour could be a statistical happenstance. For any practical purposes, this behaviour can be overlooked as a difference in test error is only in the order of $1E$ - 4 and can be less significant for many of the control problems. Further, generalization of the method the present disclosure for Koopman approximation is tested under various initialization conditions of the spacecraft rendezvous problem. Table 4 provides a performance comparison between the ANN and SNN models.

Table 4

| | Train Error | Val Error | Test Error |
|---|---|---|---|
| **ANN** | 8.63E-4 | 8.80E-4 | 8.94E-4 |
| **SNN** | 6.05E-4 | 6.05E-4 | **5.95E-4** |

As can be seen from Table 4, the Test error of SNN is lower than that of the ANN, implying a better generalization in the range beyond the training data distribution. The mean Koopman operator for the spacecraft rendezvous problem, when estimated using the ANN and the SNN, show similar eigenvalues at [0.9997 ± 0.0139*i*] which is consistent with the observations that an inclusion of the higher order gravitational potential terms leads to a divergent relative separation trajectory for the uncontrolled system. However, SNN based approach operates on lesser number of past training window data, when compared to ANN, making it more adaptive to the system changes.

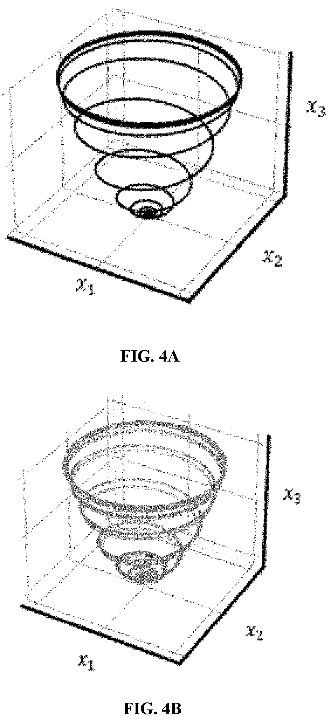

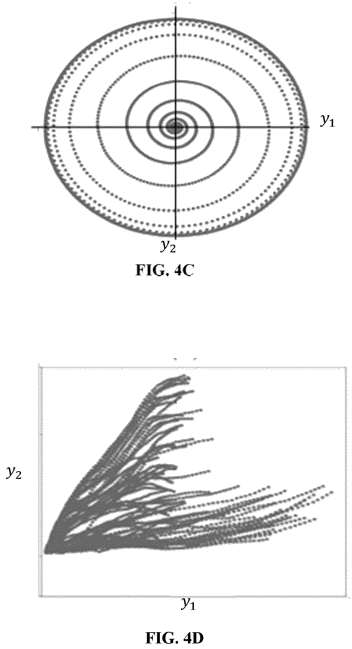

Further, a predictive performance of the method the present disclosure for Koopman approximation is evaluated using the Fluid Flow 1 dataset. To evolve the states of a random trajectory solely from its initial states using the SNN was attempted. FIGS. 4A through 4D depict graphical representations illustrating visualization of the system for approximation of Koopman operator in terms of trajectory and latent space, in accordance with some embodiments of the present disclosure. FIG. 4A depicts a graphical representation of a sample trajectory of a 3-dimensional Fluid-Flow data, in accordance with some embodiments of the present disclosure. FIG. 4B depicts a graphical representation illustrating predicted trajectory comparisons between ANN and SNN respectively, in accordance with some embodiments of the present disclosure. As shown in the FIGS. 4A and 4B, the difference in prediction quality between ANN and SNN approximations is minimal, and in both cases, the predicted trajectory successfully mirrors the original dynamics. In the present disclosure, latent space representations learned by both networks are also visualized. FIG. 4C depicts a graphical representation showing a latent space representation generated by the ANN for the 3-dimensional Fluid-Flow data trajectory, in accordance with some embodiments of the present disclosure. As shown in FIG. 4C, the latent space representation generated by the ANN learns an observable space that closely resembles the original trajectory. The actual latent space representations from the SNN, which are spike trains, cannot be visualized in the same manner as that of ANN. Therefore, the visualization is the one that has been decoded following an integration operation. FIG. 4C depicts a graphical representation showing a latent space representation generated by the ANN for the 3-dimensional Fluid-Flow data trajectory, in accordance with some embodiments of the present disclosure. As shown in FIG. 4D, the SNN latent representations exhibit a stark contrast and they do not maintain any structure of the original trajectory. This is an anticipated outcome as states are transitioned from real-valued domain to a discrete and discontinuous spike domain. Despite this, it can still predict original dynamics consistently with minimal error degradation. The method of the present disclosure delivers at par accuracy with existing methods, but its true advantage lies in the reduced computational effort it requires. Table 5 provides a comparison of computation effort per inference between ANN and SNN.

Table 5

|  | # of Addition | | # of Multiplication | | Estimate on Loihi™ for SNN | |
|---|---|---|---|---|---|---|
| **Dataset** | **ANN** | **SNN** | **ANN** | **SNN** | **SOP/ts** | **Energy** ($\mu J$) |
| **Discrete Spectrum** | 4.3M | 1.2M | 4.3M | 0.1M | 96 | 0.036 |
| **Non-Linear Pendulum** | 0.7M | 0.3M | 0.7M | 51K | 74 | 0.021 |
| **Fluid Flow 1** | 0.2M | 0.1M | 0.3M | 33K | 57 | 0.012 |
| **Fluid Flow 2** | 0.2M | 95K | 0.2M | 30K | 51 | 0.024 |

As indicated in Table 5, across all datasets, the average number of additions during inference is 2-4 times lower than that in the ANN. However, key distinction becomes apparent when comparing an average number of multiplications performed by both the ANN and SNN models. For the SNN model, this number is significantly lower (6 - 43 $\times$) than that of the ANN, which is a result of the inherent sparsity of the SNN. In the present disclosure during comparison, the network architecture of the SNN is strictly kept same as that of the ANN. All the traditional compression techniques like quantization, pruning, distillation, and/or the like, which reduce the number of operations for ANN, can also be applied on top of our network for further reduction in computations.

In SNNs, the total number of operations is typically quantified by a metric known as Synaptic Operations (SOP). SOP is defined as an average number of spikes per timestep, considering all training and inference activities. As can be observed from the sixth column of Table 5, the number of SOPs per timestep per inference is quite small, attributable to the optimized spiking activity within the SNN layers. The power requirements of an SNN are directly proportional to the total number of SOPs performed during its operation. The seventh column of the Table 5 provides an estimate of energy consumption when the system is implemented on Intel™'s neuromorphic chip, named Loihi. The estimated energy consumption per inference, measured in microJoules ($\mu J$), has been computed and is sufficiently low to align with power budget of edge devices.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

Koopman operator theory is a widely used method to analyze, control, and predict the behavior of the states of a non-linear dynamical system using measurement functions in Hilbert space. Real time approximation of the Koopman operator in-situ at edge devices such as drones, robots, automated cars, satellites are crucial in order to adapt and understand the behavior of underlying non-linear dynamical system. Traditional approaches leverage matrix-based methods or artificial neural networks (specifically encoder-decoder architectures) to approximate Koopman operator. However, such methods necessitate significant power and computational resources, therefore may not be suitable for applications that require real-time on-board processing, such as sensor fusion in robotics/autonomous vehicles or adaptive control for drone stabilization. The problems of the conventional approaches are resolved based on recent development of brain inspired spiking neural networks and neuromorphic computing platforms that could provide an effective solution, as these offer extremely low-energy computation and real-time responses. Embodiments of the present disclosure provide implementation of a Spiking Neural Network (SNN) based architecture, that can efficiently approximate Koopman operator. The system of the present disclosure, when tested over four external systems, demonstrated significant computational savings with up to 4$\times$ fewer addition operations and 43$\times$ fewer multiplication operations, while using only 20% of the input data compared to its ANN counterpart.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g., hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1. A processor implemented method, comprising:

   receiving (202), via one or more hardware processors, a time varying input state vector representing a sequence of states of a non-linear dynamical system as an input;
   inputting (204), via the one or more hardware processors, the time varying state vector to a spiking neural network (SNN) based architecture, wherein the SNN based architecture comprises a spiking encoder block, a Koopman block and a spiking decoder block, wherein the spiking encoder block comprises of a stacked Leaky Integrate-and-Fire-neuron (LIF-neuron) layers, and wherein the stacked Leaky Integrate-and-Fire-neuron (LIF-neuron) layers comprises a direct spike encoding layer as a first layer and one or more subsequent LIF-neuron layers;
   obtaining (206), via the one or more hardware processors, a sparse-spike domain representation of the time varying state vector from the direct spike encoding layer of the spiking encoder block of the SNN based architecture by applying the time varying state vector to a membrane potential of a plurality of LIF neurons;
   applying (208), via the one or more hardware processors, the sparse-spike domain representation of the time varying state vector to the one or more subsequent LIF-neuron layers to obtain a time varying intermediate state vector providing a finite approximation of a sparse-spike domain representation of a plurality of Koopman eigenfunctions in a Koopman observable space;
   estimating (210), via the one or more hardware processors, a plurality of complex eigen values continuously from the time varying intermediate state vector using the Koopman block of the SNN based architecture;
   computing (212), via the one or more hardware processors, a Koopman operator Matrix as a parameterization of the plurality of complex eigen values, wherein the Koopman operator matrix linearly evolves dynamics in a latent space; and

obtaining (214), via the one or more hardware processors, a time varying reconstructed state vector using the spiking decoder network of the SNN architecture by performing an inverse transformation from the Koopman observable space to an input space of the non-linear dynamical system.

2. The processor implemented method as claimed in claim 1, wherein the SNN based architecture provides a finite approximation of a Koopman operator by optimizing a loss function associated with the one or more parameters of the SNN based architecture.

3. The processor implemented method as claimed in claim 1, wherein the loss function is characterized as: $\mathcal{L} = \beta_1 L_{recon} + \beta_2 L_{pred} + \beta_3 L_{in} + \beta_4 L_{reg}$, where $L_{recon}$ represents a reconstruction loss component of the SNN based architecture, $L_{pred}$ represents a prediction loss component, $L_{in}$ represents a linearity loss component, $L_{reg}$ represents a regularization component, and $\beta_1$ $\beta_2$, $\beta_3$, and $\beta_4$ represent weight factors.

4. The processor implemented method as claimed in claim 3, wherein the reconstruction loss component is computed as a mean squared error between input sequence of states and reconstructed sequence of states of the non-linear dynamical system at time instant $t$.

5. The processor implemented method as claimed in claim 3, wherein the prediction loss component ensures that a future sequence of states of the non-linear dynamical system are accurately predicted from the Koopman observable space for a pre-defined time window.

6. The processor implemented method as claimed in claim 3, wherein the linear loss component ensures that the Koopman operator matrix evolves dynamics in the latent space in a linear fashion.

7. The processor implemented method as claimed in claim 3, wherein the regularization component is computed as:

$$L_{reg} = \left\| x_t - \varphi_s^{-1}\big(\varphi_s(x_t)\big) \right\|_\infty + \left\| x_{t+1} - \varphi_s^{-1}\big(K\varphi_s(x_t)\big) \right\|_\infty + \left\| W \right\|_2^2,$$

where, $x_t$ represents the sequence of states of the non-linear dynamical system at time instant $t$, $x_{t+1}$ represents the sequence of states of the non-linear dynamical system at time instant $t + 1$, $\varphi_s$ represents the spiking encoder block, $\varphi_s^{-1}$ represents the spiking decoder block, $K$ represents the Koopman operator matrix, and $W$ represents the one or more parameters of the SNN based architecture.

8. A system (100) comprising

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

receive a time varying input state vector representing a sequence of states of a non-linear dynamical system as an input;
input the time varying state vector to a spiking neural network (SNN) based architecture, wherein the SNN based architecture comprises a spiking encoder block, a Koopman block and a spiking decoder block, wherein the spiking encoder block comprises of a stacked Leaky Integrate-and-Fire-neuron (LIF-neuron) layers, and wherein the stacked Leaky Integrate-and-Fire-neuron (LIF-neuron) layers comprises a direct spike encoding layer as a first layer and one or more subsequent LIF-neuron layers;
obtain a sparse-spike domain representation of the time varying state vector from the direct spike encoding layer of the spiking encoder block of the SNN based architecture by applying the time varying state vector to a membrane potential of a plurality of LIF neurons;
apply the sparse-spike domain representation of the time varying state vector to the one or more subsequent LIF-neuron layers to obtain a time varying intermediate state vector providing a finite approximation of a sparse-spike domain representation of a plurality of Koopman eigenfunctions in a Koopman observable space;
estimate a plurality of complex eigen values continuously from the time varying intermediate state vector using the Koopman block of the SNN based architecture;

compute, a Koopman operator Matrix as a parameterization of the plurality of complex eigen values, wherein the Koopman operator matrix linearly evolves dynamics in a latent space; and

obtain, a time varying reconstructed state vector using the spiking decoder network of the SNN architecture by performing an inverse transformation from the Koopman observable space to an input space of the non-linear dynamical system.

9. The system as claimed in claim 8, wherein the SNN based architecture provides a finite approximation of a Koopman operator by optimizing a loss function associated with the one or more parameters of the SNN based architecture.

10. The system as claimed in claim 8, wherein the loss function is characterized as:

$\mathcal{L} = \beta_1 L_{recon} + \beta_2 L_{pred} + \beta_3 L_{in} + \beta_4 L_{reg}$, where $L_{recon}$ represents a reconstruction loss component of the SNN based architecture, $L_{pred}$ represents a prediction loss component, $L_{in}$ represents a linearity loss component, $L_{reg}$ represents a regularization component, and $\beta_1$ $\beta_2$, $\beta_3$, and $\beta_4$ represent weight factors.

11. The system as claimed in claim 10, wherein the reconstruction loss component is computed as a mean squared error between input sequence of states and reconstructed sequence of states of the non-linear dynamical system at time instant $t$.

12. The system as claimed in claim 10, wherein the prediction loss component ensures that a future sequence of states of the non-linear dynamical system are accurately predicted from the Koopman observable space for a pre-defined time window.

13. The system as claimed in claim 10, wherein the linear loss component ensures that the Koopman operator matrix evolves dynamics in the latent space in a linear fashion.

14. The system as claimed in claim 10, wherein the regularization component is computed as:

$$L_{reg} = \left\| x_t - \varphi_s^{-1}\big(\varphi_s(x_t)\big) \right\|_\infty + \left\| x_{t+1} - \varphi_s^{-1}\big(K\varphi_s(x_t)\big) \right\|_\infty + \|W\|_2^2,$$

where, $x_t$ represents the sequence of states of the non-linear dynamical system at time instant $t$, $x_{t+1}$ represents the sequence of states of the non-linear dynamical system at time instant $t + 1$, $\varphi_s$ represents the spiking encoder block, $\varphi_s^{-1}$ represents the spiking decoder block, $K$ represents the Koopman operator matrix, and $W$ represents the one or more parameters of the SNN based architecture.

15. One or more non-transitory machine-readable information storage mediums comprising one or more instructions which when executed by one or more hardware processors cause:

receiving, a time varying input state vector representing a sequence of states of a non-linear dynamical system as an input;

inputting , the time varying state vector to a spiking neural network (SNN) based architecture, wherein the SNN based architecture comprises a spiking encoder block, a Koopman block and a spiking decoder block, wherein the spiking encoder block comprises of a stacked Leaky Integrate-and-Fire-neuron (LIF-neuron) layers, and wherein the stacked Leaky Integrate-and-Fire-neuron (LIF-neuron) layers comprises a direct spike encoding layer as a first layer and one or more subsequent LIF-neuron layers;

obtaining, a sparse-spike domain representation of the time varying state vector from the direct spike encoding layer of the spiking encoder block of the SNN based architecture by applying the time varying state vector to a membrane potential of a plurality of LIF neurons;

applying, the sparse-spike domain representation of the time varying state vector to the one or more subsequent LIF-neuron layers to obtain a time varying intermediate state vector providing a finite approximation of a sparse-spike domain representation of a plurality of Koopman eigenfunctions in a Koopman observable space;

estimating, a plurality of complex eigen values continuously from the time varying intermediate state vector using the Koopman block of the SNN based architecture;

computing, a Koopman operator Matrix as a parameterization of the plurality of complex eigen values, wherein the Koopman operator matrix linearly evolves dynamics in a latent space; and

obtaining, a time varying reconstructed state vector using the spiking decoder network of the SNN architecture by performing an inverse transformation from the Koopman observable space to an input space of the non-linear dynamical system.

System **100**

**108**

Memory **102**

Modules **102a**

Repository **102b**

I/O interface(s) **106**

Hardware processor(s) **104**

**FIG. 1**

200 ⌐

Receiving, a time varying input state vector representing a sequence of states of a non-linear dynamical system as input ⌐202

↓

Inputting the time varying state vector to a spiking neural network (SNN) based architecture, wherein the SNN based architecture comprises a spiking encoder block, a Koopman block and a spiking decoder block, wherein the spiking encoder block comprises of a stacked Leaky Integrate-and-Fire-neuron (LIF-neuron) layers, and wherein the stacked Leaky Integrate-and-Fire-neuron (LIF-neuron) layers comprises a direct spike encoding layer as a first layer and one or more subsequent LIF-neuron layers ⌐204

↓

Obtaining a sparse-spike domain representation of the time varying state vector from the direct spike encoding layer of the spiking encoder block of the SNN based architecture by applying the time varying state vector to a membrane potential of a plurality of LIF neurons ⌐206

↓

Applying the sparse-spike domain representation of the time varying state vector to the one or more subsequent LIF-neuron layers to obtain a time varying intermediate state vector providing a finite approximation of a sparse-spike domain representation of a plurality of Koopman eigenfunctions in a Koopman observable space ⌐208

↓

Estimating a plurality of complex eigen values continuously from the time varying intermediate state vector using the Koopman block of the SNN based architecture ⌐210

↓

Computing a Koopman operator Matrix as a parameterization of the plurality of complex eigen values, wherein the Koopman operator matrix linearly evolves dynamics in a latent space ⌐212

↓

Obtaining a time varying reconstructed state vector using the spiking decoder network of the SNN architecture by performing an inverse transformation from the Koopman observable space to an input space of the non-linear dynamical system ⌐214

**FIG. 2**

FIG. 3

**FIG. 4A**

**FIG. 4B**

FIG. 4C

FIG. 4D

## EUROPEAN SEARCH REPORT

**Application Number**

EP 25 18 4351

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRIYAM GUPTA ET AL: "Mori-Zwanzig latent space Koopman closure for nonlinear autoencoder", ARXIV.ORG, CORNELL UNIVERSITY LIBRARY, 201 OLIN LIBRARY CORNELL UNIVERSITY ITHACA, NY 14853, [Online] 16 April 2024 (2024-04-16), XP091728651, [retrieved on 2025-10-17] * page 3 * * page 6 - page 8 * * page 10 - page 11 * | 1-15 | INV. G06N3/0455 G06N3/049 G06N3/0495 |
| A | MARVYN GULINA ET AL: "Two methods to approximate the Koopman operator with a reservoir computer", ARXIV.ORG, CORNELL UNIVERSITY LIBRARY, 201 OLIN LIBRARY CORNELL UNIVERSITY ITHACA, NY 14853, [Online] 24 August 2020 (2020-08-24), XP081747046, [retrieved on 2025-10-17] * page 4 * * page 5 - page 7 * * page 12 - page 13 * * page 22 * * figure 3 * | 1-15 | |
| A | OMRI AZENCOT ET AL: "Forecasting Sequential Data using Consistent Koopman Autoencoders", ARXIV.ORG, CORNELL UNIVERSITY LIBRARY, 201 OLIN LIBRARY CORNELL UNIVERSITY ITHACA, NY 14853, 30 June 2020 (2020-06-30), XP081686850, * the whole document * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 6 November 2025 | Tidriri, Khaoula |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421056904